## Europäisches Patentamt
## European Patent Office
## Office européen des brevets

(19)

(11) Numéro de publication: **0 086 717 B1**

(12) **FASCICULE DE BREVET EUROPEEN**

(45) Date de publication du fascicule du brevet:
02.05.85

(51) Int. Cl.⁴: **F 16 C 1/26**

(21) Numéro de dépôt: 83400297.4

(22) Date de dépôt: 11.02.83

(54) Dispositif de fixation sur une paroi d'une gaine flexible.

(30) Priorité: 15.02.82 FR 8202421

(43) Date de publication de la demande:
24.08.83 Bulletin 83/34

(45) Mention de la délivrance du brevet:
02.05.85 Bulletin 85/18

(84) Etats contractants désignés:
DE GB IT

(56) Documents cités:
EP - A - 0 048 620
EP - A - 0 060 735
FR - A - 2 360 785
FR - A - 2 411 332
FR - A - 2 420 164
US - A - 3 285 551
US - A - 4 177 691

(73) Titulaire: **SOCIETE ANONYME D.B.A., Centre Paris Pleyel, F-93521 St-Denis Cédex 01 (FR)**

(72) Inventeur: **Guidicelli, Charles, 5 rue du bon Vouloir St Jean du Bois, F-72430 Noyen (FR)**

(74) Mandataire: **Le Moenner, Gabriel et al, SERVICE BREVETS BENDIX 44, Rue François 1er, F-75008 Paris (FR)**

ACTORUM AG

## Description

La présente invention a pour objet un dispositif de fixation sur une paroi d'une gaine flexible dans laquelle un câble de commande est reçu en coulissement.

Le dispositif de fixation est du type comprenant un embout de gaine associé à cette dernière au voisinage de son extrémité. L'embout de gaine est prévu pour être reçu dans une ouverture ménagée dans une paroi et comporte à cet effet une surface de butée frontale prévue pour prendre appui sur une face de la paroi. Un tel type de dispositif de fixation est notamment décrit dans la demande de brevet européen N° 0060735. Le dispositif décrit dans cette demande vise plus particulièrement un embout de gaine adaptable à une des extrémités de la gaine d'un câble de commande du type généralement utilisé sur les véhicules automobiles pour commander les freins ou un embrayage à friction. Le dispositif décrit permet d'effectuer la mise en place du câble de commande sur le véhicule, quelles que soient les tolérances de fabrication des véhicules, au moyen d'un dispositif de blocage permettant d'immobiliser axialement l'extrémité de la gaine par rapport à l'embout après la mise en place du câble de commande sur le véhicule. Dans les différents modes de réalisation illustrés dans cette demande, les moyens de blocage sont constitués par un système à coincement par billes disposées entre une surface de portée tronconique de l'embout et la surface externe de l'extrémité de gaine. Il s'avère à l'usage qu'un tel type de dispositif à coincement par billes ne permet pas de transmettre des efforts trop importants par le câble de commande sans risque d'endommager la surface externe de la gaine et par là même peut provoquer des déplacements axiaux intempestifs de cette extrémité par rapport à l'embout.

L'invention a pour but de proposer un dispositif de fixation sur une paroi d'une gaine flexible du type susmentionné avec l'extrémité de la gaine s'étendant au-delà de l'extrémité libre dudit embout qui débouche du côté de l'autre face de ladite paroi, qui soit de structure simple, de faible coût de fabrication, de mise en œuvre facile et fiable.

Dans ce but, l'invention propose un dispositif de fixation du type qui vient d'être décrit et qui est caractérisé en ce que ledit embout est muni d'une pince dont les mors sont susceptibles de venir par serrage en engagement de friction avec la surface externe de ladite gaine pour immobiliser axialement cette dernière par rapport audit embout, ledit embout comportant également des moyens de serrage permettant de provoquer le serrage desdits mors.

On comprend qu'un tel dispositif élimine les inconvénients dus au système à coincement par billes, permet un libre positionnement de l'extrémité de la gaine s'étendant au-delà de l'embout lors de l'installation sur un véhicule et assure un blocage rapide et sûr de la gaine sur la paroi dans la position requise.

On comprend notamment qu'un tel agencement permet de réaliser une mise en place de la gaine sur le véhicule indépendamment des tolérances de fabrication de ce dernier en autorisant le déplacement axial initial de la gaine par rapport à l'embout, puis en permettant d'immobiliser rapidement, et sans manœuvres délicates, le dispositif de fixation par rapport à la paroi une fois un préréglage de la longueur de la gaine effectué.

On décrira maintenant, à titre d'exemple, des modes de réalisation d'un dispositif de fixation conforme aux enseignements de la présente invention en se référant aux dessins annexés dans lesquels:

la fig. 1 est une vue latérale externe d'un dispositif de fixation selon la présente invention installé sur un câble de commande du type pousser-tirer dans laquelle le dispositif de fixation est représenté en position ouverte lors de la mise en place du câble sur un véhicule;

la fig. 2 est une vue en coupe selon la ligne 2-2 de la fig. 1;

la fig. 3 est une vue latérale extérieure du dispositif de fixation de la fig. 1 représenté en position fermée;

la fig. 4 est une vue en coupe selon la ligne 4-4 de la fig. 3;

la fig. 5 est une vue en coupe agrandie du dispositif de fixation de la fig. 1;

la fig. 6 est une vue en coupe selon la ligne 6-6 de la fig. 5;

la fig. 7 est une vue en coupe agrandie du dispositif de fixation de la fig. 3 en position fermée, et

la fig. 8 est une vue en coupe selon la ligne 8-8 de la fig. 7.

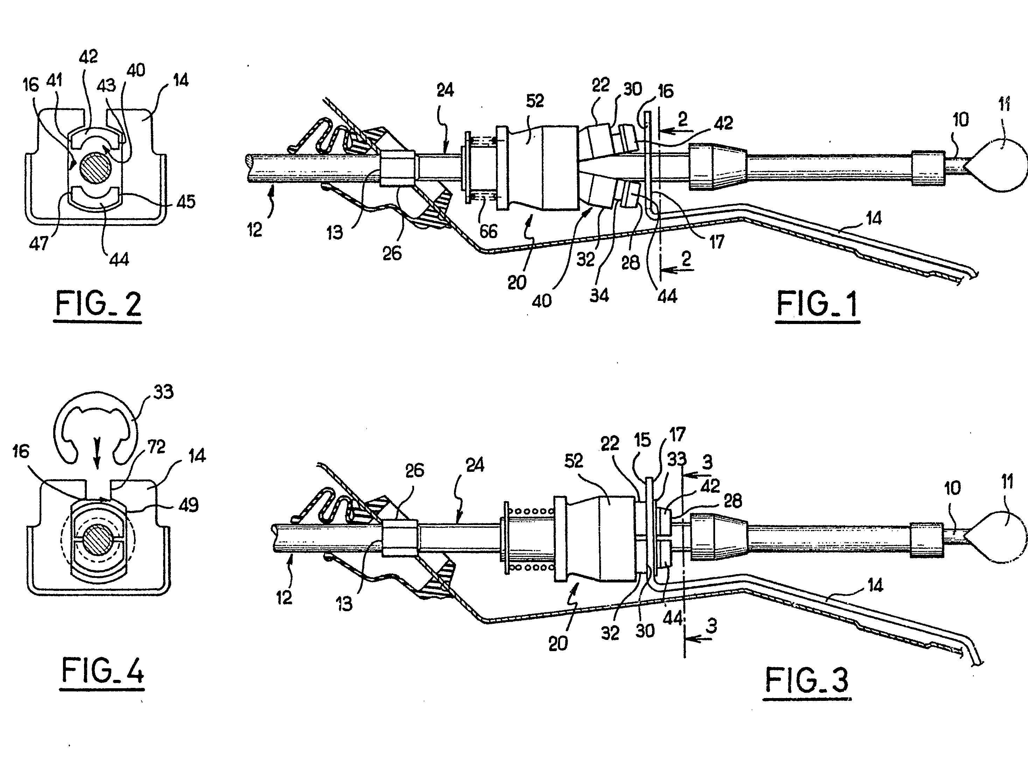

On a représenté à la fig. 1 une portion d'une commande mécanique à distance du type pousser-tirer comprenant un câble de commande 10 reçu en coulissement axial dans une gaine cylindrique flexible 12.

Afin de simplifier la représentation, on n'a illustré que l'une des deux extrémités de la gaine flexible 12. La gaine flexible 12 est fixée sur une paroi 14 au moyen d'un dispositif de fixation 20. Le dispositif de fixation 20 comprend un embout de fixation 22 prévu pour être reçu dans une ouverture 16 ménagée dans la paroi 14. Dans le mode de réalisation représenté, l'extrémité de la gaine flexible 12 est constituée par une portion de tube rigide qui est fixée à l'extrémité 13 de la partie flexible de la gaine 12 au moyen d'une bague de sertissage 26. L'extrémité de gaine constituée par le tube 24 s'étend, comme on peut le voir à la fig. 2, au-delà de l'extrémité libre 28 de l'embout 22. Comme on peut le voir à la fig. 3, lorsque le dispositif de fixation est en position fermée et que le câble de commande est installé, l'embout 22 prend appui sur une face 15 de la paroi 14 au moyen d'une surface de butée 30 constituée par la paroi frontale droite d'un épaulement 32 de l'embout 22. L'extrémité 28 de l'embout 22 et par là même l'ensemble du dispositif de fixation 20 sont immobilisés en position par rapport à la paroi 14 au moyen d'un anneau ou circlips 33 qui est reçu élastiquement dans une gorge 34 formée dans l'embout 22 au voisinage de la face latérale dudit épaulement 32.

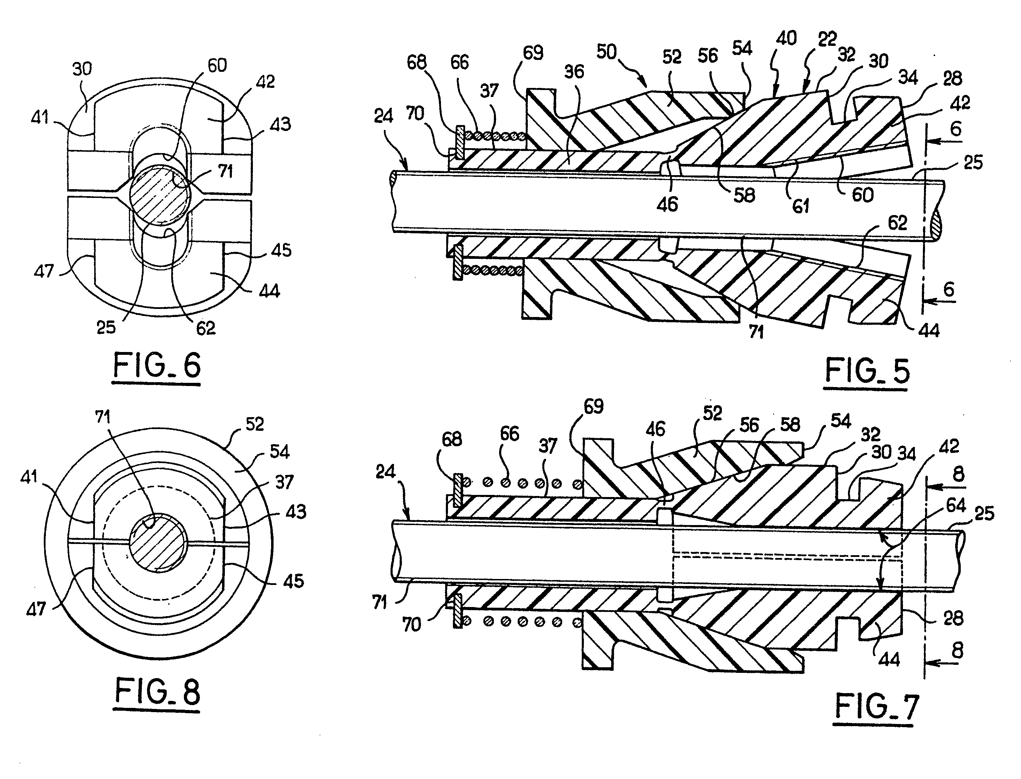

Conformément à l'invention, l'embout 22 est muni d'une pince 40 et, comme on peut le voir plus en détail aux fig. 5 et 7, l'embout 22 est constitué d'une partie de virole cylindrique 36 enfilée sur l'extrémité de gaine constituée par le tube 24 et qui se prolonge par ladite pince 40. La virole 36 étant réalisée en matière plastique, la pince 40 est venue de matière avec la virole 36 et est constituée au moins de deux mors 42 et 44. Les deux mors 42 et 44 ont la forme de deux coquilles semi-cylindriques dont la réunion, lorsque la pince est serrée comme on peut le voir à la fig. 7, forme le prolongement de la virole 36 sous la forme d'un embout cylindrique dont l'extrémité présente un profil classique d'embout de gaine de câble.

Les mors 42 et 44 de la pince 40 sont articulés sur la virole 36 par une portion amincie 46 de cette dernière reliant une extrémité de chacun des mors à la virole 36. La portion d'épaisseur réduite 46 présente ainsi la forme d'une languette dont la souplesse permet l'articulation de chacun des mors par rapport à la virole 36.

Conformément à l'invention, le dispositif de fixation comporte en outre des moyens de serrage 50. Les moyens de serrage 50 sont constitués par une bague 52 montée coulissante sur la surface cylindrique externe 37 de la virole 36 de façon que la bague de serrage 52 puisse être déplacée axialement par rapport à la virole 36. La bague 52 est munie, au voisinage de son extrémité 54, d'un profil de came sensiblement tronconique 56 susceptible de coopérer avec un profil de came tronconique complémentaire 58 formé sur la paroi externe de chacun des mors 42 et 44. On comprend que la coopération entre le profil 56 et le profil 58 constitue des moyens formant rampe qui permettent d'agir sur lesdits mors par déplacement axial de la bague 52 vers la droite afin de provoquer le pivotement des mors 42 et 44 autour de leur articulation 46 et par là même de permettre l'engagement de friction entre les parois internes 60 et 62 des mors 42 et 44 et la surface externe 25 de la portion d'extrémité de gaine 24.

Dans le mode de réalisation représenté, la paroi interne des mors 42 et 44 est constituée par la paroi interne d'un alésage cylindrique 64 qui est reconstitué lorsque les deux mors sont en position serrée. Les moyens de serrage 50 comportent également un ressort de serrage 66.

Le ressort de serrage 66 consiste en un ressort hélicoïdal disposé concentriquement à la surface externe 37 de la virole 36 et qui prend appui sur un épaulement 68 formé sur la surface externe 37 de la virole 36 pour solliciter élastiquement la bague de serrage 52 dans le sens correspondant au déplacement de cette dernière par rapport à la virole afin de provoquer le serrage des mors 42 et 44 au moyen des profils 56 et 58. Le ressort hélicoïdal 66 est monté comprimé entre l'épaulement 68 formé à l'extrémité de la virole 36 et la face frontale d'extrémité adjacente 69 de la bague de serrage 52 sur laquelle il prend appui pour solliciter cette dernière dans la direction vers les mors 42 et 44.

Dans le mode de réalisation représenté, l'épaulement 68 est constitué par un circlips monté dans une gorge 70 formée à la surface externe 37 de la virole 36.

Afin d'améliorer l'engagement de friction entre la paroi interne des mors 42 et 44 et la surface externe 25 de la gaine, la paroi interne des mors est munie de crans coopérant avec des crans complémentaires formés à la surface externe 25 de la gaine. Dans le mode de réalisation représenté, les crans sont constitués par un filetage interne réalisé dans la paroi interne cylindrique 64 constituée par la réunion des parois internes 60 et 62 des mors 42 et 44. Le filet 61 ainsi réalisé coopère avec un filet de pas et de diamètre nominal complémentaires 71 formé sur la paroi externe 25 de la portion de tube rigide 24 constituant l'extrémité de la gaine 12. On conçoit que, dans un autre mode de réalisation, non représenté, dans lequel l'extrémité de la gaine serait constituée par un fil enroulé en hélice de façon à obtenir une extrémité flexible, le filet 61 formé dans la paroi interne des mors 42 et 44 devrait avoir un profil complémentaire du profil de la surface externe de la gaine constituée par l'enroulement en hélice dudit fil et qui présente sensiblement le profil d'un filetage.

Dans le mode de réalisation qui vient d'être décrit, la pince 40 est constituée de deux mors semi-cylindriques 42 et 44; on conçoit toutefois que la pince pourrait être constituée d'un plus grand nombre de mors dont chacun serait constitué par un secteur circulaire de la coquille cylindrique qu'ils formeraient en position fermée, cette coquille ayant un profil identique ou similaire à celle constituée par les deux mors 42 et 44 du mode de réalisation illustré.

On décrira maintenant la procédure de mise en place et de fixation de la gaine et du câble de commande 10 sur la paroi 14 au moyen du dispositif de fixation 20 en se référant notamment aux fig. 1 et 3. Lorsqu'un opérateur désire installer le câble de commande, par exemple sur un véhicule automobile, il doit commencer par accrocher les deux extrémités du câble de commande 10 aux organes moteur et récepteur correspondants. Dans le mode de réalisation illustré à la fig. 1, l'extrémité 11 du câble 10 peut par exemple être reliée au levier de commande d'une boîte de vitesses automatiques. L'opérateur doit ensuite immobiliser axialement une première extrémité de la gaine 12 (qui n'est pas représentée sur les dessins), au moyen par exemple d'un embout de gaine classique, c'est-à-dire du type ne permettant pas un réglage de la position relative de la gaine par rapport à l'embout. Cette première extrémité de gaine est ainsi immobilisée par rapport à un bâti fixe que constitue le châssis du véhicule et dont la paroi 14 est un élément.

Afin de procéder à la mise en place du dispositif de fixation et au réglage de la longueur de la gaine, l'opérateur provoque l'ouverture de la pince 40 afin que les mors de celle-ci occupent la position représentée à la fig. 1. Pour ce faire, l'opérateur agit sur la bague de serrage 52 à l'encontre du ressort de serrage 66 afin de permettre l'ouverture des mors 42 et 44. L'embout constitué par la virole 36 et les mors 42 et 44 étant réalisés en matière plastique, il est souhaitable de prévoir lors du moulage de cet élément que les mors occupent normalement une position ouverte, l'élasticité des languettes 46 les rappelant dans cette position ouverte lorsque l'on agit sur la bague 52 et que l'on déplace cette dernière vers la gauche. Dans cette position, on comprend que l'embout 22 peut être enfilé sur le conduit déplacé axialement par rapport à l'extrémité de la gaine 24. L'opérateur effectue la mise en place du câble et de la gaine et fait coulisser axialement l'ensemble du dispositif de fixation 20 sur la gaine ainsi positionnée jusqu'à amener la surface de butée 30 formée sur les mors de l'embout 22 en contact avec la face 15 de la paroi. Dans cette dernière position, l'opérateur n'a plus qu'à provoquer le serrage de la pince 40 sur la surface externe 25 de la gaine en agissant sur les moyens de serrage constitués par la bague 52, c'est-à-dire en relâchant cette dernière qui, sous l'effet de la sollicitation élastique exercée par le ressort 66, va se déplacer vers la droite et provoquer l'engagement de friction des mors 42 et 44 grâce au profil de came 56 et 58 décrit plus haut. Ainsi, l'engagement de la paroi interne 60, 62 des mors 42 et 44 avec la paroi externe 25 de la gaine 12 va provoquer l'immobilisation de cette dernière par rapport au dispositif de fixation 20 et à la paroi 14. Les composants du dispositif de fixation 20 occupent alors la position représentée aux fig. 3 et 7 et il ne reste plus à l'opérateur qu'à bloquer le dispositif de fixation 20 par rapport à la paroi 14. Pour ce faire, l'opérateur introduit alors l'anneau d'immobilisation 33 dans la gorge 34 prévue à cet effet qui, dans le mode de réalisation représenté, se prolonge axialement du côté de la face 17 de la paroi 14 et forme les surfaces de butée 30. Comme on peut le voir, notamment, à la fig. 4, l'anneau d'immobilisation peut être introduit verticalement dans la gorge 34, qui présente, en configuration de fermeture des mors, une allure sensiblement cylindrique. Lorsqu'il est en place, l'anneau d'immobilisation coopère avec la face 17 de la paroi 14 pour éviter tout déplacement axial du dispositif de fixation 20 par rapport à cette dernière, la paroi étant serrée entre la face latérale 30 de l'épaulement 32 et la face latérale de l'anneau de fixation en vis-à-vis de la face 17 de la paroi, l'anneau 33 s'opposant par ailleurs à tout écartement intempestif des mors 42 et 44 en complétant ainsi, en verrouillage, l'effet de serrage de l'anneau 52.

Afin d'éviter toute rotation intempestive du dispositif de fixation 20 et par là même de la gaine 12 et permettre un meilleur positionnement du dispositif de fixation 20 dans l'ouverture 16 ménagée dans la paroi 14, et comme on peut le constater aux fig. 2, 4, 6 et 8, les extrémités libres des mors 42 et 44 présentent des pans coupés latéraux plans 41, 43, 45 et 47. Ces pans coupés plans coopèrent avec le contour 49 de l'ouverture 16 qui possède un profil polygonal complémentaire, c'est-à-dire que, dans l'exemple représenté, les deux bords latéraux sont droits et espacés d'une distance correspondant à la distance séparant les pans coupés 41 et 43, et 45, 47 respectivement. Selon un autre détail de réalisation, l'ouverture 16 ménagée dans la paroi 14 présente un dégagement 72 s'étendant vers le haut et s'ouvrant vers l'extérieur et qui permet d'introduire la partie extrême de l'embout 22 en faisant passer la gorge 34 des mors dans le dégagement 72. Ce détail de réalisation permet notamment d'effectuer le montage du dispositif de fixation alors même que les moyens de fixation prévus à l'extrémité 11 du câble de commande 10 ne permettraient pas le passage de ceux-ci dans l'ouverture 16 ménagée dans la paroi par une simple introduction axiale dans cette dernière, l'introduction transversale de l'embout 22 dans l'ouverture 16, *via* le dégagement 72, permettant alors de réaliser la fixation du dispositif sur la paroi 14 d'une manière similaire à celle décrite plus haut.

## Revendications

1. Dispositif de fixation (20) sur une paroi (14) d'une gaine flexible (12) dans laquelle un câble de commande (10) est reçu en coulissement, du type comprenant un embout (22) susceptible d'être associé à la gaine (12) au voisinage d'une extrémité (24) de cette dernière et prévu pour être monté dans une ouverture (16) ménagée dans ladite paroi (14), l'embout (22) comportant une surface de butée (30) prévue pour prendre appui sur une face (15) de la paroi (14), ladite extrémité (24) de la gaine (12) s'étendant au-delà de l'extrémité libre (28) dudit embout (22) qui débouche du côté de l'autre face (17) de ladite paroi (14), l'embout (22) comprenant une pince (40) dont les mors (42, 44) sont susceptibles de venir par serrage en engagement de friction avec la surface externe (25) de la gaine (12) pour immobiliser axialement cette dernière par rapport à l'embout (22), le dispositif comportant également des moyens de serrage déverrouillables (50) permettant de provoquer le serrage des mors (42, 44) de la pince (40), caractérisé en ce que la pince (40) est formée dans le prolongement d'une virole cylindrique (36), les mors (42, 44) étant montés articulés sur ladite virole (36) et formant, au voisinage de leur extrémité libre (28) opposée à la virole (36), ladite surface de butée (30), les moyens de serrage (50) étant constitués par une bague (52) montée coulissante sur ladite virole cylindrique (36) et munie de moyens formant rampe (56, 58) pour agir sur lesdits mors (42, 44) et faire pivoter ces derniers en direction de la surface externe de la gaine (25) et provoquer leur engagement de friction avec cette dernière lorsque la bague (52) est déplacée axialement par rapport à ladite virole dans la direction correspondante.

2. Dispositif de fixation selon la revendication 1, caractérisé en ce que les moyens de serrage comportent en outre un ressort de serrage (66) prenant appui sur un épaulement formé sur ladite

7        0 086 717        8

virole (36) pour solliciter élastiquement la bague de serrage (52) et provoquer son déplacement axial dans la direction correspondant au serrage desdits mors (42, 44).

3. Dispositif de fixation selon l'une des revendications 1 ou 2, caractérisé en ce que la virole (36) est réalisée en matière plastique, les mors (42, 44) étant venus de matière avec ladite virole (36), chaque mors étant relié à cette dernière par l'une de ses extrémités au moyen d'une languette (46) constituant l'articulation du mors sur la virole.

4. Dispositif de fixation selon la revendication 3, caratérisé en ce que chacun des mors (42, 44) est constitué par un secteur circulaire d'une coquille cylindrique dont la paroi interne coopère en engagement de friction avec la surface externe de la gaine lorsque les moyens de serrage sont actionnés, les moyens formant rampe étant constitués par un profil de came (56) formé intérieurement sur la bague de serrage et par un profil complémentaire correspondant (58) formé extérieurement sur la paroi externe de chacun des mors.

5. Dispositif de fixation selon l'une des revendications 1 à 4, caractérisé en ce que les mors sont munis intérieurement de crans (61).

6. Dispositif de fixation selon les revendications 4 et 5, caractérisé en ce que les crans (61) sont constitués par un filet interne réalisé dans la paroi interne cylindrique (64) des secteurs de coquille cylindrique.

7. Dispositif de fixation selon la revendication 6, caractérisé en ce qu'il comporte un tube rigide fixé à l'extrémité de ladite gaine et muni à sa périphérie externe d'un filet (67) dont le pas et le diamètre nominal sont complémentaires du filet interne (61) des mors (42, 44).

8. Dispositif de fixation selon la revendication 6, pour immobiliser une gaine dont la surface externe est constituée par un fil métallique enroulé en hélice, caractérisé en ce que le filet interne (61) des mors (42, 44) a un profil et un pas complémentaires du profil de la surface externe de la gaine.

9. Dispositif de fixation selon l'une des revendications 1 à 8, caractérisé en ce que les surfaces de butée (30) formées sur chacun des mors (42, 44) sont constituées par un secteur correspondant d'un épaulement cylindrique externe (32).

10. Dispositif de fixation selon l'une des revendications 1 à 9, caractérisé en ce que chaque mors (42, 44) est muni, au voisinage de son extrémité libre (28), d'un secteur correspondant d'une gorge (34) formant la surface de butée (30) et destinée à recevoir un anneau d'immobilisation coopérant avec l'autre face (17) de la paroi (14) pour immobiliser axialement le dispositif de fixation (20) dans la paroi (14) et empêcher tout écartement intempestif des mors (42, 44) de la pince (40).

**Patentansprüche**

1. Befestigungsvorrichtung (20) zur Befestigung einer ein Steuerkabel (10) gleitend aufnehmenden biegsamen Hülle (12) an einer Wand (14), mit einem Endteil (22), das der Hülle (12) angrenzend an einem Ende (24) der Hülle zugeordnet werden kann und in einer Öffnung (16) der Wand (14) anbringbar ist, wobei das Endteil (22) eine Anlagefläche (30) aufweist, die an einer Stirnseite (15) der Wand (14) anlegbar ist, wobei sich das besagte Ende (24) der Hülle (12) über das freie Ende (28) des Endteiles (22) hinaus erstreckt, das auf der Seite der anderen Stirnfläche (17) der Wand (14) endet, wobei das Endteil (22) eine Zange (40) aufweist, deren Backen (42, 44) durch Klemmwirkung in Reibanlage mir der Aussenfläche (25) der Hülle (12) gebracht werden können, um die letztere bezüglich des Endteiles (22) axial festzulegen, wobei die Befestigungsvorrichtung ausserdem lösbare Spannmittel (50) aufweist, die die Klemmwirkung der Backen (42, 44) der Zange (40) hervorrufen, dadurch gekennzeichnet, dass die Zange (40) als Verlängerung einer zylindrischen Hülse (36) ausgebildet ist, wobei die Backen (42, 44) an der Hülse (36) gelenkig angebracht sind und benachbart zu ihrem freien Ende (28), gegenüber der Hülse (36), die besagte Anlagefläche (30) bilden, wobei die Spannmittel (50) aus einem Ring (52) bestehen, der auf der zylindrischen Hülse (36) gleitend gelagert ist und mit einer Rampe (56, 58) versehen sind, die auf die Backen (42, 44) einwirkt, um die letzteren in Richtung der Aussenfläche der Hülle (25) zu verschwenken und ihre Reibungsanlage an der letzteren hervorzurufen, wenn der Ring (52) bezüglich der Hülse in der entsprechenden Richtung axial verschoben wird.

2. Befestigungsvorrichtung nach Anspruch 1, dadurch gekennzeichnet, dass die Spannmittel ausserdem eine Spannfeder (66) aufweisen, die an einer Schulter der Hülse (36) angreift, um den Spannring (52) elastisch vorzuspannen und ihn axial im Sinne eines Spannens der Backen (42, 44) zu verschieben.

3. Befestigungsvorrichtung nach einem der Ansprüche 1 oder 2, dadurch gekennzeichnet, dass die Hülse (36) aus einem Kunststoff besteht und die Backen (42, 44) aus dem Material der Hülse (36) gebildet sind, wobei jeder Backen mit der Hülse an einem seiner Enden mittels eines laschenförmigen Teils (46) verbunden ist, das das Gelenk des Backens an der Hülse bildet.

4. Befestigungsvorrichtung nach Anspruch 3, dadurch gekennzeichnet, dass jeder Backen (42, 44) von einem kreisförmigen Sektor einer zylindrischen Schale gebildet wird, deren Innenwand in Reibanlage mit der Aussenwand der Hülse gelangt, wenn die Spannmittel betätigt werden, wobei die Rampe von einem Nockenprofil (56), das innerlich am Spannring vorgesehen ist, und von einem entsprechenden komplementären Profil (58), das äusserlich an der Aussenwand jedes der Backen vorgesehen ist, gebildet wird.

5. Befestigungsvorrichtung nach einem der Ansprüche 1 bis 4, dadurch gekennzeichnet, dass die Backen auf der Innenseite mit Kerben (61) versehen sind.

6. Befestigungsvorrichtung nach den Ansprüchen 4 und 5, dadurch gekennzeichnet, dass die Kerben (61) von einem Innengewinde gebildet werden, das an der zylindrischen Innenwand (64) der Sektoren der zylindrischen Schale gebildet ist.

7. Befestigungsvorrichtung nach Anspruch 6, dadurch gekennzeichnet, dass sie ein starres Rohr aufweist, das am Ende der Hülle festgelegt und an seinem Aussenumfang mit einem Gewinde (67) versehen ist, deren Steigung und Nenndurchmesser komplementär zum Innengewinde (61) der Backen (42, 44) ausgebildet sind.

8. Befestigungsvorrichtung nach Anspruch 6 zum Festlegen einer Hülle, deren Aussenfläche von einem schraubenförmig gewickelten Metalldraht gebildet wird, dadurch gekennzeichnet, dass das Innengewinde (61) der Backen (42, 44) ein Profil und eine Steigung hat, die komplementär zum Profil der Aussenfläche der Hülle sind.

9. Befestigungsvorrichtung nach einem der Ansprüche 1 bis 8, dadurch gekennzeichnet, dass die Anlageflächen (30), die an jedem der Backen (42, 44) vorgesehen sind, von einem Sektor gebildet werden, der einer zylindrischen Aussenschulter (32) entspricht.

10. Befestigungsvorrichtung nach einem der Ansprüche 1 bis 9, dadurch gekennzeichnet, dass jeder Backen (42, 44) benachbart zu seinem freien Ende (28) mit einem Sektor versehen ist, der einer Ringnut (34) entspricht, die die Anlagefläche (30) bildet und zur Aufnahme eines Sicherungsringes dient, der mit der anderen Stirnfläche (17) der Wand (14) zusammenwirkt, um die Befestigungsvorrichtung (20) in der Wand (14) axial festzulegen und jegliche unbeabsichtigte Öffnung der Backen (42, 44) der Zange (40) zu verhindern.

## Claims

1. A retaining device (20) for fixing a flexible sleeve to a panel (14), said sleeve slidingly receiving a control cable (10), of the type comprising an end piece (22) adapted to be associated to the sleeve (12) adjacent to one end (24) of the latter and provided to be mounted within an opening (16) in said panel (14), said end piece (22) comprising an abutment surface (30) provided to engage a face (15) of the panel (14), said end (24) of the sleeve (12) extending beyond the free end (28) of said end piece (22) which extends to the side of the other face (17) of said panel (14), said end piece (22) comprising tongs means (40) having arms (42, 44) adapted to be clamped into frictional engagement with the external surface (25) of the sleeve (12) in order to axially fix the latter with respect to the end piece (22), said device also comprising disengageable clamping means (50) allowing to provide the clamping of the arms (42, 44) of the tongs means (40), characterized in that the tongs means (40) are formed as an elongation of a cylindrical bushing (36), said arms (42, 44) being pivotally mounted on said bushing (36) and comprising said abutment surface (30) adjacent to their free ends (28) opposite the bushing (36), the clamping means (50) being formed by a ring (52) slidingly mounted on the cylindrical bushing (36) and provided with means forming a ramp (56, 58) for acting upon said arms (42, 44) and for making pivot the latters in the direction of the external surface of the sleeve (25) and causing their frictional engagement with the latter when the ring (52) is axially displaced with respect to said bushing in the corresponding direction.

2. The retaining device of Claim 1, characterized in that said clamping means comprise a clamping spring (66) engaging a shoulder formed on said bushing (36) for resiliently biasing the clamping ring (52) and causing its axial displacement in the direction corresponding to clamping of said arms (42, 44).

3. The retaining device according to any of Claims 1 or 2, characterized in that said bushing (36) is made of a plastic material, the arms (42, 44) being integral with said bushing (36), each arm being connected to the latter by one of its ends by means of a strap (46) forming the pivot of the arm on the bushing.

4. The retaining device of Claim 3, characterized in that each of the arms (42, 44) is comprised of a circular sector of a cylindrical shell having an internal wall cooperating by frictional engagement with the external surface of the sleeve upon actuation of the clamping means, said means forming a ramp comprising a cam profile (56) formed internally on the clamping ring and a corresponding complementary profile (58) formed externally on the external wall of each of the arms.

5. The retaining device of any of Claims 1 to 4, characterized in that the arms are provided with flutes (61) on their inner sides.

6. The retaining device of Claims 4 and 5, characterized in that said flutes (61) are comprised of internal threads on the cylindrical internal wall (64) of the sectors of the cylindrical shell.

7. The retaining device of Claim 6, characterized in that it comprises a rigid tube fixed at the end of said sleeve and provided at its external periphery with threads (67) having an inclination and a nominal diameter that are complementary to the internal threads (61) of the arms (42, 44).

8. The retaining device of Claim 6 for immobilizing a sleeve having an external surface comprised of a helically wound metal wire, characterized in that the internal threads (61) of the arms (42, 44) have a profile and an inclination complementary to the profile of the external surface of the sleeve.

9. The retaining device of any of Claims 1 to 8, characterized in that the abutment surfaces (30) formed on each of the arms (42, 44) are comprised of a corresponding sector of an external cylindrical shoulder (32).

10. The retaining device of any of Claims 1 to 9, characterized in that each arm (42, 44) adjacent to its free end (28) is provided with a corresponding sector of an annular groove (34) forming the abutment surface (30) and intended to receive a retaining ring cooperating with the other face (17)

of the panel (14) for axially retaining the retaining device (20) in the wall (14) and preventing any inadvertent expansion of the arms (42, 44) of the tongs means (40).

FIG.2

FIG.4

FIG.1

FIG.3

0 086 717

FIG_6

FIG_5

FIG_8

FIG_7

0 086 717